# EUROPÄISCHE PATENTANMELDUNG

(11) **EP 2 248 704 A2**
(43) Veröffentlichungstag der Anmeldung: **10.11.2010**
(21) Anmeldenummer: 10004104.5
(22) Anmeldetag: 17.04.2010
(51) Int. Cl.: B60R 21/34, B62D 25/10

(54) **Frontklappe für Kraftfahrzeuge**

(30) Priorität: 06.05.2009 DE 102009020087
(71) Anmelder: Volkswagen Aktiengesellschaft, 38436 Wolfsburg (DE)
(72) Erfinder: Winkler, Joachim, 38321 Denkte (DE); Musolff, Christian, 38531 Rötgesbüttel (DE); Besch, Alexander, 38518 Gifhorn (DE)

(57) **Zusammenfassung**

Es wird eine Frontklappe (3) für Kraftfahrzeuge, mit einer Außenschale (1) und mit zumindest einer unterhalb der Außenschale (1) angeordneten, dieselbe verstärkenden Innenschale (2) vorgeschlagen, wobei Außenschale (1) und Innenschale (2) wenigstens abschnittsweise untereinander fest verbunden sind, wobei die Frontklappe (3) einen Fußgängerschutz in Form einer deformierbaren Kopfaufprallzone (7) aufweist, wobei beidseitig der Frontklappe (3) an der Innenschale (2) derselben je ein Klappenscharnier (8) befestigt ist, und wobei jedem Klappenscharnier (8) je eine Scharnierverstärkung (11) zugeordnet ist, welche zwischen der Außenschale (1) und der Innenschale (2) angeordnet und an der Innenschale (2) festgelegt ist., Vorteilhaft ist der Scharnierverstärkung (11) zumindest eine ausgehend von derselben sich in die Kopfaufprallzone (7) hinein erstreckende Lasche (12, 12') zugeordnet, welche einenends mit der Scharnierverstärkung (11) fest verbunden und anderenends wenigstens im Falle eines Kopfaufpralls auf die Frontklappe (3) an der zur Innenschale (2) weisenden Oberfläche der Außenschale (1) abgestützt ist.

## Beschreibung

Die Erfindung betrifft eine Frontklappe für Kraftfahrzeuge gemäß dem Oberbegriff des Patentanspruchs 1.

Kollidiert ein Kraftfahrzeug frontal mit einem Fußgänger, wird derselbe im Allgemeinen von der Stoßstange erfasst, schlägt nachfolgend mit dem Oberkörper bzw. dem Kopf auf insbesondere der Frontklappe auf und kann sich in der Folge beträchtliche Körperschäden zuziehen. Aufgrund dessen hat die fahrzeugherstellende Industrie umfangreiche Anstrengungen unternommen, um diesem nachteiligen Umstand zu begegnen und die Körperschäden des Fußgängers zu minimieren. Grundsätzlich ist dabei die erforderliche Grundsteifigkeit der Frontklappe in Einklang mit einem möglichst hohen Fußgängerschutz zu bringen. Die sogenannte Kopfaufschlagprüfung ist hierbei ein wichtiges Prüfkriterium. Ziel ist es, einen möglichst niedrigen HIC-Wert (HIC = Head Injury Criterion) zu erhalten. Insoweit ist es bereits bekannt, die Frontklappe selbst so auszubilden, dass diese im Falle eines etwaigen Zusammenstoßes mit einem Fußgänger möglichst schonend für denselben Aufprallenergie absorbiert.

So sind bereits gattungsbildende Frontklappen respektive Motorhauben für Kraftfahrzeuge bekannt, die aus zwei oder mehr tragenden Schalen aufgebaut sind, von denen die außenliegende Außenschale die Außenseite der Motorhaube als Fahrzeugkontur darstellt, und von denen mindestens eine der innenliegenden Innenschalen als Verstärkungsschale mit der Außenschale verbunden ist. Die Frontklappe ist mittels an ihren Randbereichen an einer Innenschale angebrachten Auflagern, wie Klappenscharnieren, mit der Karosserie des Kraftfahrzeugs verbunden. Besagten Klappenscharnieren sind zweckmäßigerweise Scharnierverstärkungen zugeordnet. Zum Schutz von Fußgängern bei einer Kollision mit einem Kraftfahrzeug weist eine Motorhaube gemäß der EP 1 093 980 B1 eine deformierbare Kopfaufprallzone mit bereichsweise unterschiedlichen Biegesteifigkeiten auf, die ihrerseits dadurch bewirkt sind, dass die Verstärkungsschale über unterschiedliche Blechdicken verfügt und/oder mit Sicken ausgebildet ist. Des Weiteren ist es aus der DE 601 26 673 T2 und der DE 102 59 591 A1 bekannt, zur Senkung des HIC-Wertes eine Innenplatte bzw. ein Innenpaneel einer Motorhaube mit einer Wölbstruktur auszubilden, wobei die ausgebildeten Wölbungen mit der Außenplatte bzw. mit dem Außenpaneel verbunden sein können.

Aufgabe der Erfindung ist es, eine im Hinblick auf den Stand der Technik alternative Frontklappe für Kraftfahrzeuge zu schaffen, welche mittels einfacher und kostengünstiger Maßnahmen neben der Gewährleistung der erforderlichen Steifigkeit der Frontklappe im Normalbetrieb im Hinblick auf einen etwaigen Zusammenstoß mit einem Fußgänger oder einem anderen Verkehrsteilnehmer, wie beispielsweise auch einem Zweiradfahrer, einen möglichst niedrigen HIC-Wert bei einer Kopfaufschlagprüfung gewährleistet.

Ausgehend von einer Frontklappe für Kraftfahrzeuge, mit einer Außenschale und mit zumindest einer unterhalb der Außenschale angeordneten, dieselbe verstärkenden Innenschale, wobei Außenschale und Innenschale wenigstens abschnittsweise untereinander fest verbunden sind, wobei die Frontklappe einen Fußgängerschutz in Form einer deformierbaren Kopfaufprallzone aufweist, wobei beidseitig der Frontklappe an der Innenschale derselben je ein Klappenscharnier befestigt ist, und wobei jedem Klappenscharnier je eine Scharnierverstärkung zugeordnet ist, welche zwischen der Außenschale und der Innenschale angeordnet und an der Innenschale festgelegt ist, wird die gestellte Aufgabe dadurch gelöst, dass der Scharnierverstärkung zumindest eine ausgehend von derselben sich in die Kopfaufprallzone hinein erstreckende Lasche zugeordnet ist, welche einenends mit der Scharnierverstärkung fest verbunden und anderenends wenigstens im Falle eines Kopfaufpralls auf die Frontklappe an der zur Innenschale weisenden Oberfläche der Außenschale abgestützt ist.

Durch diese einfache und kostengünstige Maßnahme ist eine Erhöhung der Steifigkeit mit einer gleichzeitigen Verbesserung des HIC-Wertes der Frontklappe vorteilhaft kombiniert. In umfangreichen Versuchen dazu wurde gefunden, dass im Falle eines Kopfaufpralles auf die Frontklappe der erste Beschleunigungspeak beim Kopfimpaktor zwar erhöht, dadurch jedoch vorteilhaft ein geringeres Durchschlagen desselben auf die Innenschale zu verzeichnen ist, wodurch schwerwiegende Körperschäden im günstigsten Fall vermieden, zumindest jedoch maßgeblich gemindert sind.

Die Unteransprüche beschreiben bevorzugte Weiterbildungen oder Ausgestaltungen der Erfindung.

Danach kann die zumindest eine Lasche lose an der Außenschale abgestützt oder fest mit derselben verbunden sein, wodurch der Grad der Absorption der Aufprallenergie sowie der Steifigkeit der Frontklappe, insbesondere deren Außenschale in weiten Grenzen einstellbar ist. Ist die Lasche fest mit der Außenschale verbunden, bietet es sich an, dieselbe zu verkleben, wodurch Abzeichnungen auf der Außenschale infolge der Abstützung derselben auf besagter Lasche vermieden sind. Bevorzugt besteht die Lasche aus einem derartigen Werkstoff und ist derart dimensioniert, dass dieselbe infolge Aufprall eines Kopfimpaktors (Kopfaufprall eines Fußgängers) auf besagte Kopfaufprallzone der Frontklappe, Aufprallenergie absorbierend, eine überwiegend plastische Verformung erfährt. In Versuchen hat sich gezeigt, dass Abstützungsmittel, die eine überwiegend elastischer Abstützung vorsehen und demgemäß Anstoßenergie zumindest teilweise speichern, nach der Stoßbelastung infolge des Zusammenstoßes mit einem Fußgänger zum sogenannten "Zurückfedern" neigen, welches sich wiederum nachteilig auf den Fußgänger auswirken kann und demgemäß zu vermeiden ist. Im Hinblick darauf bietet es sich insbesondere an, die zumindest eine Lasche aus einem Metall, wie einem Stahl oder einer Leichtmetalllegierung, auszubilden. Demgegenüber kann auch jeglicher anderer geeigneter Werkstoff, wie beispielsweise ein Kunststoff oder ein Verbundwerkstoff Verwendung finden, sofern dieser infolge einer Stoßbelastung überwiegend eine plastische Verformung erfährt. Weiter vorteilhaft kann die zumindest eine Lasche einstückig mit der Scharnierverstärkung ausgebildet sein, welches sich einfach und kostengünstig bewerkstelligen lässt, wenn besagte Scharnierverstärkung ein Blechumform- und/oder Stanzteil ist.

Die Erfindung wird nachstehend anhand eines in den Zeichnungen schematisch dargestellten Ausführungsbeispieles näher erläutert. Es zeigen:
- Fig. 1: eine perspektivische Einzelteilansicht des erfindungsrelevanten Bereiches einer Innenschale einer erfindungsgemäß ausgebildeten Frontklappe eines Kraftfahrzeugs mit verbautem Klappenscharnier gemäß einer ersten möglichen Ausgestaltungsvariante,
- Fig. 2: die Draufsicht auf den erfindungsrelevanten Bereich der Innenschale nach Fig. 1 im Zusammenbau mit dem Vorderwagen eines Kraftfahrzeugs,
- Fig. 3: einen Schnitt durch den Zusammenbau aus Außenschale und Innenschale der Frontklappe entlang der Schnittlinie I-I nach Fig. 2,
- Fig. 4: die Draufsicht auf den erfindungsrelevanten Bereich der Innenschale der Frontklappe gemäß einer weiteren möglichen Ausgestaltungsvariante, und
- Fig. 5: eine perspektivische Ansicht des erfindungsrelevanten Bereiches der Innenschale der Frontklappe nach Fig. 4.

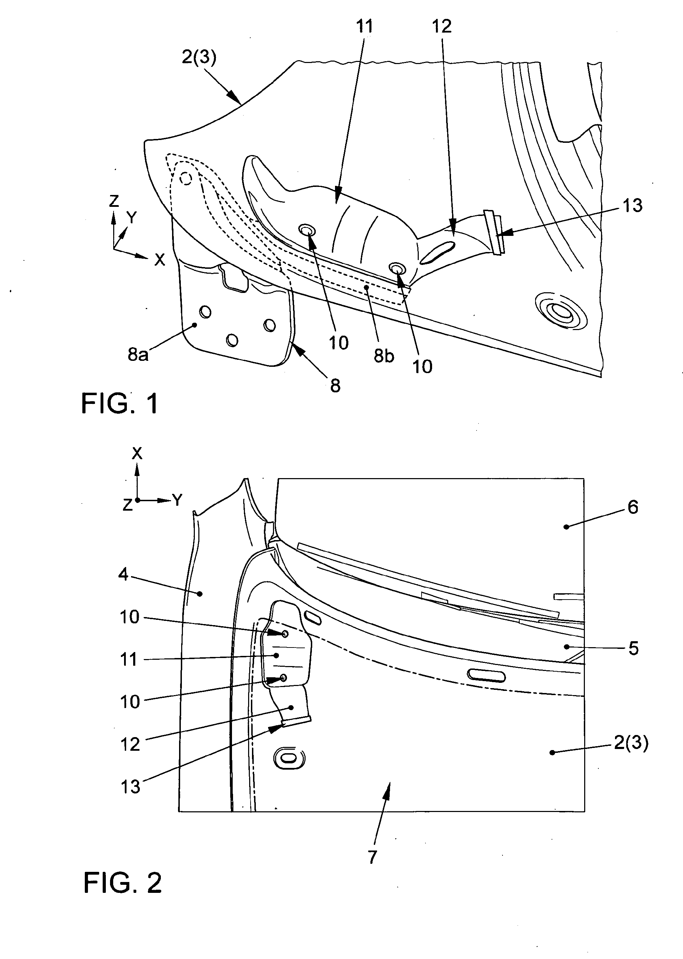

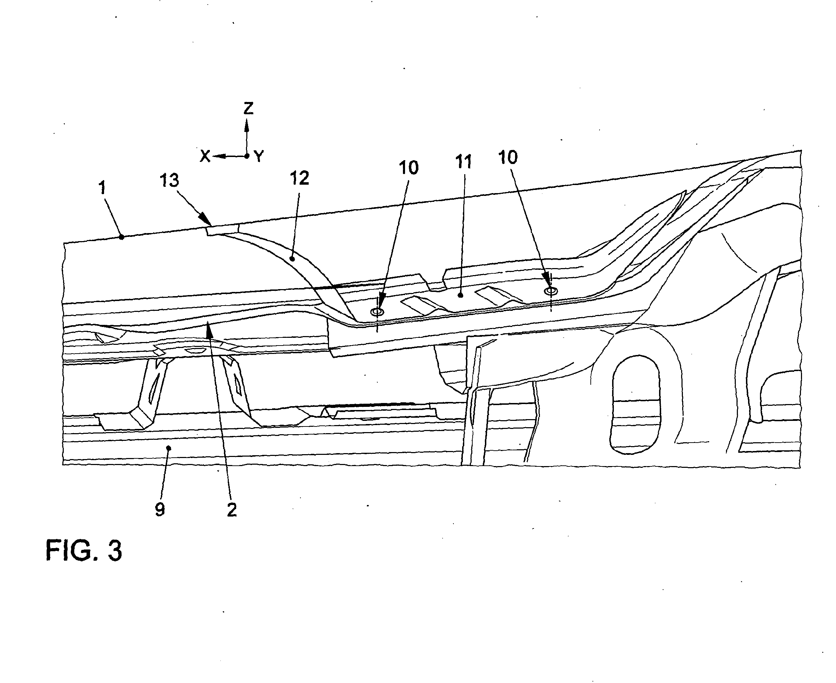

Die Fig. 1 bis 3 zeigen danach eine Außenschale 1 und/oder eine unterhalb derselben angeordnete dieselbe verstärkende Innenschale 2 einer Frontklappe 3 eines Kraftfahrzeugs, welche sich ihrerseits bekanntermaßen zwischen beidseitig des Kraftfahrzeugs angeordneter vorderen Kötflügeln 4 sowie dem Scheibenrahmen 5 der Frontscheibe 6 und dem hier nicht näher dargestellten Frontend des Kraftfahrzeugs erstreckt. Vorliegend ist der Einfachheit und besseren Übersichtlichkeit halber lediglich der hintere rechte Bereich der Frontklappe 3 dargestellt.

Außen- und Innenschale 1, 2 der Frontklappe 3 bestehen vorzugsweise aus einem fiefgezogenen Blech, welches Stahlblech oder auch Leichtmetallblech, beispielsweise Aluminiumblech sein kann, und sind abschnittsweise untereinander derart fest verbunden, vorzugsweise durch Klebung, dass in ausgewählten Bereichen der Frontklappe 3 ein Fußgängerschutz in Form einer deformierbaren Kopfaufprallzone 7 (strich-punktierte Linienführung) ausgebildet wird.

Die Frontklappe 3 ist vorliegend mittels an ihren hinteren Randbereichen an der Innenschale 2 angebrachter Klappenscharniere 8 mit der Karosserie 9 des Kraftfahrzeugs verbunden, wobei ein unterer Scharnierteil 8a des jeweiligen Klappenscharniers 8 an besagter Karosserie 9 und ein oberer Scharnierteil 8b an der Unterseite der Innenschale 2 mittels an sich bekannter mechanischer Befestigungselemente 10, wie Verschraubungen, festgelegt sind.

Den Klappenscharnieren 8 respektive deren oberen Scharnierteil 8b ist jeweils eine Scharnierverstärkung 11 zugeordnet, welche vorzugsweise aus Metallblech (Stahl, Leichtmetalllegierung) besteht, auf der Oberseite der Innenschale 2 angeordnet und vorzugsweise ebenfalls mittels besagter Befestigungselemente 10 für das obere Scharnierteil 8b an der Innenschale 2 fixiert ist.

Besagter Scharnierverstärkung 11 ist eine von derselben ausgehende und in die Kopfaufprallzone 7 sich hinein erstreckende Lasche 12 zugeordnet, welche ihrerseits einenends mit der Scharnierverstärkung 11 fest verbunden und anderenends, eine Beabstandung zwischen der Innenschale 2 und der Außenschale 1 überwindend, an der zur Innenschale 2 weisenden Oberfläche der Außenschale 1 abgestützt ist (vgl. insbes. Fig.. 3).

Vorliegend erstreckt sich die Lasche 12 in einem bestimmten von der Fahrzeughochrichtung (Z-Richtung) abweichenden Winkel von der Innenschale 2 zur Außenschale 1. Jedoch kann es sich auch als vorteilhaft erweisen, die Lasche 12 weitestgehend exakt in Fahrzeughochrichtung (Z-Richtung) anzuordnen, welches demgemäß durch die Erfindung mit erfasst ist (nicht näher dargestellt).

Wie bereits oben ausgeführt, ist durch diese Maßnahme zum einen eine Erhöhung der Steifigkeit und zum anderen eine gleichzeitige Verbesserung des HIC-Wertes der Frontklappe 3 zu verzeichnen.

Zweckmäßigerweise ist die Lasche 12 einstückig mit der Scharnierverstärkung 11 ausgebildet, jedoch beschränkt sich die Erfindung nicht auf dieses Ausführungsbeispiel, sondern erfasst auch Laschen 12, die als separate Bauteile ausgebildet und mit der Scharnierverstärkung 11 fest verbunden sind. Hierdurch ist es beispielsweise gestattet, die Lasche 12 aus einem Werkstoff auszubilden, der von dem Werkstoff der Scharnierverstärkung 11 abweicht. So kann es angezeigt sein, die Lasche 12 im Hinblick auf einen bestimmten gewünschten Energie-Absorptionsgrad und/oder auf eine bestimmte gewünschte Steifigkeit der Frontklappe 3 auszulegen, beispielsweise indem die Lasche 12 aus einem geeigneten Kunststoff oder Verbundwerkstoff ausgebildet wird.

Vorzugsweise besteht die Lasche 12 jedoch aus einem derartigen Werkstoff und ist derart dimensioniert, dass dieselbe infolge Aufprall eines Kopfimpaktors (Kopfaufprall eines Fußgängers oder dgl.) auf die Kopfaufprallzone 7 der Frontklappe 3 überwiegend eine plastische Verformung erfährt. Hinsichtlich der Vorteile daraus wurde bereits oben ausgeführt.

Wie den Fig. 1 bis 3 weiter zu entnehmen ist, ist das freie Ende der Lasche 12 stoffschlüssig und zwar vermittels Klebung 13 mit der Außenschale 1 verbunden, wodurch von außen sichtbare Abzeichnungen auf der Außenschale 1 wirkungsvoll vermieden sind. Im Kollisionsfall mit einem Fußgänger bzw. während des Kopfaufpralls wird die Lasche 12 auf Biegung und/oder Stauchung belastet, wodurch Anstoßenergie absorbiert wird. Von Vorteil kann es auch sein, wenn die Klebeverbindung (Klebung 13) derart ausgebildet ist, dass diese zu einem bestimmten Zeitpunkt bei Überlastung bricht oder sich sukzessive auflöst, wodurch ebenfalls Anstoßenergie absorbiert wird.

Demgegenüber kann es jedoch auch angezeigt sein und ist demgemäß durch die Erfindung ebenfalls mit erfasst, die Lasche 12 bzw. deren freies Ende lose an der Außenschale 1 abzustützen, welches sich im Kollisionsfall mit einem Fußgänger als vorteilhaft erweisen kann, indem das freie Ende der Lasche 12 während des Anstoßes an der innenliegenden Oberfläche der Außenschale 1 entlang gleitet und nicht nur durch Biegung und/oder Stauchung, sondern auch durch Reibung Anstoßenergie vernichtet wird (nicht näher dargestellt).

Vorstehendes Ausführungsbeispiel stellt auf eine Scharnierverstärkung 11 mit einer einzigen Lasche 12 ab. Die Erfindung beschränkt sich jedoch nicht auf diese Ausgestaltung, sondern erfasst auch Scharnierverstärkungen 11, denen zwei oder mehr Laschen 12 zugeordnet sind.

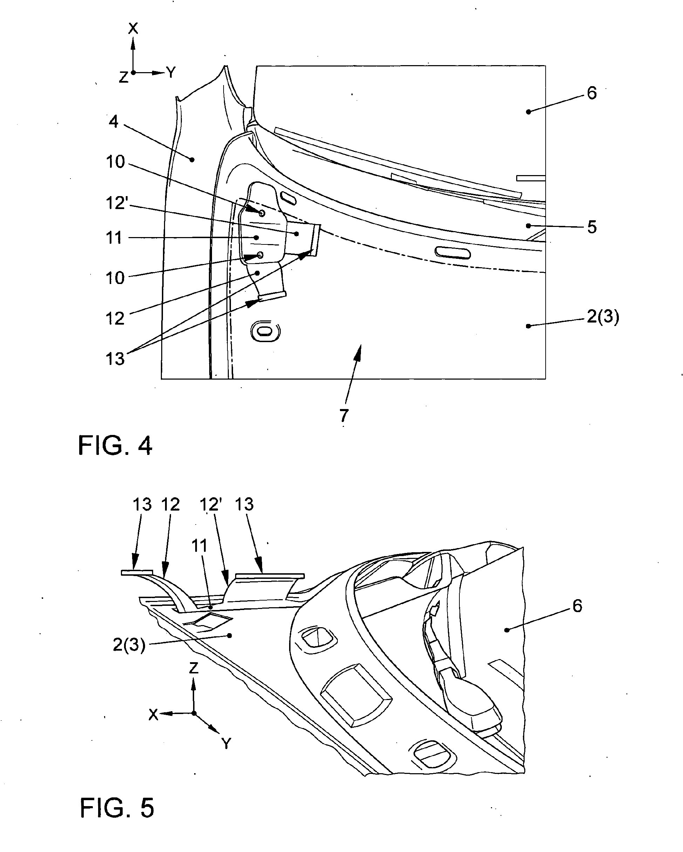

So zeigen die Fig. 4 und 5 eine Scharnierverstärkung 11 mit zwei in unterschiedlichen Richtungen weisenden Laschen 12, 12', wobei eine Lasche 12 sich weitestgehend in Fahrzeuglängsrichtung (X-Richtung) und die andere Lasche 12' sich weitestgehend in Fahrzeugquerrichtung (Y-Richtung) erstrecken.

Auch diese Laschen 12, 12' sind jeweils an ihrem freien Ende mittels Klebung 13 mit der hier nicht näher dargestellten Außenschale 1 der Frontklappe 3 stoffschlüssig verbunden.

### Bezugszeichenliste

- 1: Außenschale (Frontklappe 3)
- 2: Innenschale (Frontklappe 3)
- 3: Frontklappe
- 4: Kotflügel
- 5: Scheibenrahmen
- 6: Frontscheibe
- 7: Kopfaufprallzone
- 8: Klappenscharnier
- 8a: unteres Scharnierteil
- 8b: oberes Scharnierteil
- 9: Karosserie
- 10: Befestigungselemente
- 11: Scharnierverstärkung
- 12: Lasche
- 12': Lasche
- 13: Klebung

## Patentansprüche

1. Frontklappe (3) für Kraftfahrzeuge, mit einer Außenschale (1) und mit zumindest einer unterhalb der Außenschale (1) angeordneten, dieselbe verstärkenden Innenschale (2), wobei Außenschale (1) und Innenschale (2) wenigstens abschnittsweise untereinander fest verbunden sind, wobei die Frontklappe (3) einen Fußgängerschutz in Form einer deformierbaren Kopfaufprallzone (7) aufweist, wobei beidseitig der Frontklappe (3) an der Innenschale (2) derselben je ein Klappenscharnier (8) befestigt ist, und wobei jedem Klappenscharnier (8) je eine Scharnierverstärkung (11) zugeordnet ist, welche zwischen der Außenschale (1) und der Innenschale (2) angeordnet und an der Innenschale (2) festgelegt ist, **dadurch gekennzeichnet, dass** der Scharnierverstärkung (11) zumindest eine ausgehend von derselben sich in die Kopfaufprallzone (7) hinein erstreckende Lasche (12, 12') zugeordnet ist, welche einenends mit der Scharnierverstärkung (11) fest verbunden und anderenends wenigstens im Falle eines Kopfaufpralls auf die Frontklappe (3) an der zur Innenschale (2) weisenden Oberfläche der Außenschale (1) abgestützt ist.

2. Frontklappe (3) nach Anspruch 1, **dadurch gekennzeichnet, dass** die zumindest eine Lasche (12, 12') lose an der Außenschale (1) abgestützt oder fest mit derselben verbunden ist.

3. Frontklappe (3) nach Anspruch 2, **dadurch gekennzeichnet, dass** die zumindest eine Lasche (12, 12') mit der Außenschale (1) verklebt ist.

4. Frontklappe (3) nach einem der Ansprüche 1 bis 3, **dadurch gekennzeichnet, dass** die Lasche (12, 12') aus einem derartigen Werkstoff besteht und derart dimensioniert ist, dass dieselbe infolge Aufprall eines Kopfimpaktors (Kopfaufprall eines Fußgängers) auf besagte Kopfaufprallzone (7) der Frontklappe (3), Aufprallenergie absorbierend, überwiegend eine plastische Verformung erfährt.

5. Frontklappe (3) nach einem der Ansprüche 1 bis 4, **dadurch gekennzeichnet, dass** die Lasche (12, 12') aus Metall, wie einem Stahl oder einer Leichtmetalllegierung, oder jeglichem anderen geeigneten Werkstoff gebildet ist.

6. Frontklappe (3) nach einem der Ansprüche 1 bis 5, **dadurch gekennzeichnet, dass** die zumindest eine Lasche (12, 12') einstückig mit der Scharnierverstärkung (11) ausgebildet ist.
